# FASCICULE DE BREVET EUROPEEN

(11) **EP 3 742 699 B1**
(45) Date de publication et mention de la délivrance du brevet: **09.03.2022**
(21) Numéro de dépôt: 20175383.7
(22) Date de dépôt: 19.05.2020
(51) Int. Cl.: H04L 29/06, G06F 21/32, G06F 21/36

(54) **PROCÉDÉ D'AUTHENTIFICATION FORTE D'UN INDIVIDU**
STARKES AUTHENTIFIZIERUNGSVERFAHREN EINER PERSON
METHOD FOR STRONG AUTHENTICATION OF AN INDIVIDUAL

(30) Priorité: 24.05.2019 FR 1905521
(43) Date de publication de la demande: 25.11.2020
(73) Titulaire: Idemia Identity & Security France, 92400 Courbevoie (FR)
(72) Inventeur: BAHLOUL, Sébastien, 92400 COURBEVOIE (FR)
(74) Mandataire: Chauvin, Karen Laurence

(56) Documents cités:
- WO-A1-2018/233487
- SHI YICHUN ET AL: "DocFace+: ID Document to Selfie Matching", IEEE TRANSACTIONS ON BIOMETRICS, BEHAVIOR, AND IDENTITY SCIENCE, IEEE, vol. 1, no. 1, 1 janvier 2019 (2019-01-01) , pages 56-67, XP011713717, DOI: 10.1109/TBIOM.2019.2897807
- YAGIZ SUTCU ET AL: "Protecting Biometric Templates With Sketch: Theory and Practice", IEEE TRANSACTIONS ON INFORMATION FORENSICS AND SECURITY, IEEE, PISCATAWAY, NJ, US, vol. 2, no. 3, 1 septembre 2007 (2007-09-01), pages 503-512, XP011190363, ISSN: 1556-6013, DOI: 10.1109/TIFS.2007.902022

## Description

### DOMAINE DE L'INVENTION

L'invention concerne un procédé d'authentification forte d'un individu porteur d'un document d'identité.

### ETAT DE LA TECHNIQUE

On connait aujourd'hui des procédés d'authentification forte (i.e. à plusieurs facteurs d'authentification) très robustes, notamment tels que définis par les spécifications de l'alliance FIDO.

Par exemple, on combine un authentificateur possédé par l'utilisateur (typiquement son terminal mobile, une carte à puce, etc.) et quelque chose que l'utilisateur « sait » ou « est » (un code, un trait biométrique, etc.).

Ces procédés apportent entière satisfaction, mais présentent une faiblesse via leurs mécanismes de « recouvrement » mis en oeuvre en cas d'oubli de code ou de perte de son authentificateur.

Plus précisément, soit ces mécanismes de recouvrement n'utilisent qu'un seul facteur d'authentification (typiquement un lien est envoyé sur une adresse e-mail de récupération) et alors on perd tout le bénéfice de l'authentification forte, soit il faut conserver des informations personnelles sensibles de type « réponse à une question secrète » ou une photo d'identité.

On note d'une part que cette solution n'est pas fiable (si les informations demandées sont trop secrètes, l'utilisateur peut les perdre/les oublier, et si elles sont trop communes des pirates déterminés peuvent parvenir à les retrouver par ingénierie sociale), et d'autre part que la détention de telles information pose des problèmes en termes de respect de la vie privée des utilisateurs.

Il a été proposé dans la demande EP2656321 d'utiliser comme facteur d'authentification une image d'un objet quelconque choisi secrètement par l'individu, tel qu'un bijou ou un document d'identité. Cette méthode améliore la fiabilité, mais reste toujours problématique en termes de gestion de la vie privée.

WO 2018/233487 décrit l'authentification forte d'un individu en se basant sur une photographie présente dans un document d'identité, des données obtenues du document d'identité et d'une donnée biométrique acquise. Pour augmenter la sécurité du procédé et suite à la vérification du document d'identité il est demandé à l'individu de réaliser une séquence vidéo de quelques secondes pendant laquelle un code, envoyé par un serveur, doit être prononcer. Le serveur vérifie alors que le code prononcé par l'individu est correct ainsi que l'individu dans la séquence vidéo est celui associé au document d'identité

Il serait ainsi souhaitable de disposer d'une solution simple, fiable, sécurisée, et totalement respectueuse de la vie privée, d'authentification d'un individu, en particulier à des fins de recouvrement.

### PRESENTATION DE L'INVENTION

Selon un premier aspect, l'invention concerne un procédé d'authentification forte d'un individu mis en oeuvre par un serveur et un équipement client connectés ; l'équipement client disposant d'une donnée biométrique candidate de l'individu et d'une image acquise d'un document d'identité représentant au moins une photographie dudit individu et une donnée de lecture optique visibles sur ledit document d'identité, et le serveur disposant d'une empreinte cryptographique d'une première concaténation de ladite donnée de lecture optique dudit document d'identité et d'une première donnée d'aléa, dite première empreinte cryptographique ; le procédé étant caractérisé en ce qu'il comprend la mise en oeuvre par des moyens de traitement de données du serveur et/ou de l'équipement client d'étapes de ;
(b) Extraction, par analyse de ladite image acquise dudit document d'identité de :
   - une information candidate représentative de l'apparence de ladite photographie tel que représentée dans l'image acquise ;
   - ladite donnée de lecture optique tel que représentée dans l'image acquise ;
(c) Calcul d'une première donnée décodée par application d'une procédure de décodage à ladite information candidate représentative de l'apparence de ladite photographie et à une première donnée encodée, telle que ladite première donnée décodée correspond à la première donnée d'aléa si ladite information candidate représentative de l'apparence de ladite photographie coïncide avec une information de référence représentative de l'apparence de ladite photographie ;
(d) Vérification que :
   - une empreinte cryptographique d'une première concaténation de la donnée de lecture optique extraite et de la donnée décodée coïncide avec ladite première empreinte cryptographique dont dispose le serveur ; et
   - une donnée biométrique de référence et la donnée biométrique candidate de l'individu coïncident.

Selon d'autres caractéristiques avantageuses et non limitatives :
Le procédé comprend une étape (a) d'acquisition préalable de ladite image dudit document d'identité représentant au moins une photographie d'un individu et une donnée de lecture optique visibles sur ledit document d'identité par des moyens d'acquisition optique de l'équipement client, et la génération de la donnée biométrique candidate à partir d'un trait biométrique fourni par des moyens d'acquisition biométrique ;
Les moyens d'acquisition biométrique sont les moyens d'acquisition optique de l'équipement client, l'équipement client étant un équipement électronique personnel audit individu, en particulier de type terminal mobile ou carte à puce :
   Le serveur ou l'équipement dispose d'un chiffré de la donnée de référence biométrique dudit individu avec une empreinte cryptographique d'une deuxième concaténation de la donnée de lecture optique du document d'identité et de la première donnée d'aléa, différente de la première concaténation ; l'étape (c) comprenant le déchiffrement de l'au moins une donnée biométrique de référence dudit individu chiffrée, au moyen de l'empreinte cryptographique d'une deuxième concaténation de la donnée de lecture optique extraite et de la première donnée décodée ;
   Le serveur dispose d'une empreinte cryptographique construite à partir d'une deuxième donnée d'aléa, dite troisième empreinte cryptographique ; l'étape (c) comprenant le calcul par les moyens de traitement de données du serveur ou de l'équipement client d'une deuxième donnée décodée par application d'une procédure de décodage à ladite donnée biométrique candidate et à une deuxième donnée encodée, telle que ladite deuxième donnée décodée correspond à la deuxième donnée d'aléa si ladite donnée biométrique candidate coïncide avec la donnée biométrique de référence ; ladite vérification de l'étape (d) que la donnée biométrique de référence et la donnée biométrique candidate de l'individu coïncident comprenant la vérification qu'une empreinte cryptographique construite à partir de la deuxième donnée décodée de la même manière que la troisième empreinte cryptographique est construite à partir de la deuxième donnée d'aléa coïncide avec ladite troisième empreinte cryptographique dont dispose le serveur ;
   L'étape (a) comprend la réception par le serveur de l'image acquise dudit document d'identité et de la donnée biométrique candidate depuis l'équipement client, les étapes (b) à (d) étant mise en oeuvre par les moyens de traitement de données du serveur ;
   Le procédé comprend des étapes (b) et (c) qui sont mises en oeuvre par les moyens de traitement de données de l'équipement client, l'étape (c) comprenant le calcul de l'empreinte cryptographique d'une première concaténation de la donnée de lecture optique extraite et de la première donnée décodée, et la génération d'une preuve à divulgation nulle de connaissances du calcul de ladite empreinte cryptographique à partir de la première concaténation de la donnée de lecture optique extraite et de la première donnée décodée ; la vérification de l'étape (d) que l'empreinte cryptographique d'une première concaténation de la donnée de lecture optique extraite et de la donnée décodée coïncide avec la première empreinte cryptographique comprenant la vérification que :
      - la preuve à divulgation nulle de connaissance du calcul de ladite empreinte cryptographique à partir de la première concaténation de la donnée de lecture optique extraite et de la première donnée décodée est valide, et
      - l'empreinte cryptographique reçue coïncide avec ladite première empreinte cryptographique dont dispose le serveur ;
   Les étapes (b) et (c) sont mises en oeuvre par les moyens de traitement de données de l'équipement client, l'étape (c) comprenant la génération d'une preuve à divulgation nulle de connaissances du fait que la donnée biométrique de référence et la donnée biométrique candidate de l'individu coïncident ; ladite vérification de l'étape (d) que la donnée biométrique de référence et la donnée biométrique candidate de l'individu coïncident comprenant la vérification par les moyens de traitement de données du serveur que la preuve à divulgation nulle de connaissance du fait que la donnée biométrique de référence et la donnée biométrique candidate de l'individu coïncident est valide.
   Le procédé comprend également une étape antérieure (a0) d'enrôlement de données dudit document d'identité qui comprend des sous-étapes de :
      (A) Obtention de la photographie dudit individu visible sur ledit document d'identité et de la donnée de lecture optique du document d'identité ;
      (B) Extraction par analyse de ladite photographie de l'information de référence représentative de l'apparence de ladite photographie ;
      (C) Génération de la première donnée d'aléa ; calcul de la première donnée encodée par application d'une procédure d'encodage à ladite information de référence
      représentative de l'apparence de ladite photographie et à ladite première donnée d'aléa, et de la première empreinte cryptographique ;
   Lors de l'étape (a0), la sous-étape (A) ou la sous-étape (B) comprend l'obtention de ladite donnée biométrique de référence ; et la sous-étape étape (C) comprend en outre la génération de la deuxième donnée d'aléa et le calcul de la deuxième donnée encodée par application de ladite procédure d'encodage à ladite donnée biométrique de référence et à ladite deuxième donnée d'aléa, et de la troisième empreinte cryptographique ;
   La procédure de décodage est une procédure complémentaire d'une procédure d'esquisse d'un algorithme de type « secure sketch » ;
   La donnée de lecture optique du document d'identité est une donnée de type MRZ, QR code ou PDF417 ;
   Le procédé comprend également une étape (e) d'enrôlement d'un authentificateur, en particulier de l'alliance Fast IDentity Online, FIDO ;
   L'information de référence représentative d'une apparence attendue de ladite photographie est une donnée de sécurité de type Digital Photo Seal.

Selon un deuxième aspect, l'invention concerne un ensemble d'authentification forte comprenant un serveur et un équipement client connectés, caractérisé en ce que l'équipement client et/ou le serveur comprennent des moyens de traitement de données configurés pour :
Extraire, par analyse d'une image acquise d'un document d'identité représentant au moins une photographie d'un individu et une donnée de lecture optique visibles sur ledit document d'identité :
   - une information candidate représentative de l'apparence de ladite photographie tel que représentée dans l'image acquise ;
   - ladite donnée de lecture optique tel que représentée dans l'image acquise ;
Calculer une première donnée décodée par application d'une procédure de décodage à ladite information candidate représentative de l'apparence de ladite photographie et à la première donnée encodée, telle que ladite première donnée décodée correspond à une première donnée d'aléa si ladite information candidate représentative de l'apparence de ladite photographie coïncide avec une information de référence représentative de l'apparence de ladite photographie, le serveur disposant d'une empreinte cryptographique d'une première concaténation de ladite donnée de lecture optique dudit document d'identité et ladite première donnée d'aléa,
dite première empreinte cryptographique ;
vérifier que :
   - une empreinte cryptographique d'une première concaténation de la donnée de lecture optique extraite et de la donnée décodée coïncide avec ladite première empreinte cryptographique dont dispose le serveur ; et
   - une donnée biométrique de référence et la donnée biométrique candidate de l'individu coïncident.

Selon un troisième et un quatrième aspect, l'invention concerne un produit programme d'ordinateur comprenant des instructions de code pour l'exécution d'un procédé selon le premier aspect d'authentification forte d'un individu, lorsque ledit procédé est exécuté sur un ordinateur ; et un moyen de stockage lisible par un équipement informatique sur lequel un produit programme d'ordinateur comprend des instructions de code pour l'exécution d'un procédé selon le premier aspect d'authentification forte d'un individu.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

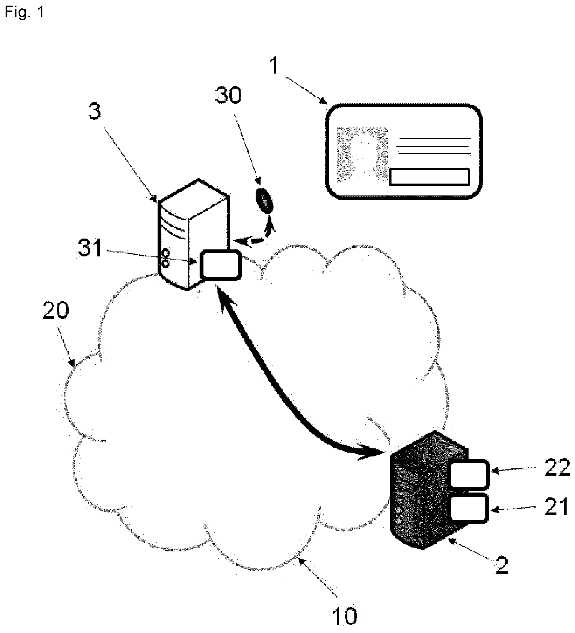

- La figure 1 représente schématiquement un système pour la mise en oeuvre des procédés selon l'invention.

### DESCRIPTION DETAILLEE

### Architecture

La présente invention concerne un procédé d'authentification forte d'un individu porteur d'un document d'identité, i.e. il permet de vérifier que cet individu est bien celui dont l'identité est présentée par le document 1, incluant possiblement un procédé d'enrôlement d'informations de ce document d'identité 1.

Le présent procédé est dit d'authentification forte car il combine « quelque chose que l'individu possède », i.e. son document d'identité 1, et « quelque chose que l'individu est/sait », en l'espèce un trait biométrique. On a en effet deux niveaux de fraudes possible :
- Le premier est la falsification du document d'identité, par exemple le changement de la photographie,
- Le deuxième est l'usurpation d'identité, par exemple l'utilisation d'un document d'identité 1 valide par un voleur comme étant le sien.

Le présent procédé permet de détecter les deux niveaux de fraude grâce au caractère fort de l'authentification.

Avantageusement, le présent procédé est un procédé « d'enrôlement d'un facteur d'authentification », c'est-à-dire d'ajout ou de modification d'un moyen de s'authentifier (qui peut être choisi parmi un mot de passe, un équipement physique d'authentification et en particulier un « authentificateur FIDO », une adresse e-mail, etc.) qui pourra ensuite être utilisé de manière récurrente pour l'authentification de tous les jours. Le précédent procédé est ainsi typiquement mis en oeuvre à la première utilisation dudit facteur d'authentification, et notamment en cas de perte d'un précédent facteur d'authentification (on parle alors de procédé de recouvrement : on est dans le cas où l'utilisateur souhaite à nouveau s'authentifier malgré cette perte) Par authentificateur FIDO, on entend un équipement de sécurité de la FIDO alliance (Fast IDentity Online) notamment conforme à un standard d'authentification tel que U2F (Universal 2nd Factor), FIDO2, Client to Authenticator Protocol (CTAP), etc. ; par exemple un terminal mobile (tel que l'équipement 3, voir après), une clé USB, une carte à puce, chacun stockant un secret (un couple clé privée/clé publique). Le présent procédé s'inscrit ainsi typiquement dans le cas de perte d'un authentificateur FIDO, mais on comprendra qu'il est parfaitement adapté à n'importe quel type de facteur d'identification, et pourrait même être mis en oeuvre à chaque authentification pour l'accès à un service pour lequel un niveau de sécurité maximal est demandé (par exemple pour faire un virement bancaire, un achat immobilier, etc.)

De manière particulièrement préférée, ledit authentificateur à enrôler est l'équipement client 3, ce qui permet une procédure d'enrôlement simple et transparente, l'équipement 3 fournissant en passage toutes les données d'identification nécessaires comme par exemple une adresse MAC, et pouvant soumettre à l'issue de cette procédure un secret (par exemple un couple de clés) luis permettant d'agir par la suite en tant qu'authentificateur de l'individu.

En référence à la **figure 1****,** on a représenté schématiquement une architecture de système d'authentification pour la mise en oeuvre du présent procédé. Ce système comprend au moins un document d'identité 1, un serveur 2 et un équipement client 3 connecté au serveur 2 via un réseau 20 tel qu'Internet.

Le document d'identité 1 est un objet personnel à un individu (de nombreux individus peuvent posséder chacun un tel document d'identité), et constitue préférentiellement un titre officiel, avantageusement émis par un organisme gouvernemental. Ce document peut prendre de nombreuses formes telle qu'une carte d'identité ou un passeport, et peut être éventuellement électronique. Alternativement ce peut être tout document choisi par l'individu ou par un fournisseur de service ayant une valeur probante pour l'authentifier, i.e. un document représentatif de l'identité de l'individu, ce pourrait par exemple être une carte de transport, une carte professionnelle, un badge d'entreprise, une licence, ou même un document créé à façon par un organisme de gestion d'authentificateurs qui serait nécessaire pour enrôler un nouvel authentificateur, par analogie avec les documents fournies avec des serrures de sécurité qui sont nécessaires pour faire un double de clés.

Selon un mode de réalisation, il prend la forme d'une carte à puce (de type « smart card ») aux dimensions standard et généralement en PVC ou polycarbonate.

Dans tous les cas, le document d'identité 1 comporte une surface solide sur laquelle sont imprimées un certain nombre d'informations et en particulier :
- Une photographie de l'individu détendeur de la carte (et éventuellement une autre donnée « graphique » telle qu'une signature de l'individu) ;
- une donnée de lecture optique (c'est-à-dire lisible automatiquement, destinée à des ordinateurs), de type MRZ, QR code ou PDF417 (on prendra l'exemple de la MRZ dans la suite du document, mais on comprendra qu'on n'est pas limité à ce type de donnée de lecture optique) ;
- Des données alphanumériques variées, dites « données visuelles », choisies notamment parmi :
   ∘ Numéro complet du document d'identité 1 ;
   ∘ Date d'expiration ;
   ∘ Date de délivrance ;
   ∘ Nom ;
   ∘ Prénom(s) ;
   ∘ Nationalité ;
   ∘ Date de Naissance ;
   ∘ Lieu de Naissance ;
   ∘ Sexe ;
   ∘ Taille ;
   ∘ Adresse ;
   ∘ etc.

Le serveur 2 est un équipement distant, sécurisé, typiquement d'une autorité ou d'un fournisseur de solution de sécurité. Il comprend des moyens de traitement de données 21 (de type processeur) et des moyens de stockage de données 22 (une mémoire, par exemple un disque dur).

L'équipement client 3 est un terminal local comprenant ou connecté à des moyens d'acquisition optique 30 (typiquement un appareil photo ou un scanner), et adapté pour acquérir une image (du document 1 comme on le verra). Il comprend en outre des moyens de traitement de données 31 et des moyens de stockage de données 32. L'équipement client 3 et le serveur 2 comprennent avantageusement des interfaces de communications leur permettant de dialoguer à distance. De manière préférée, le client 3 est un équipement personnel de l'individu porteur du document d'identité 1, par exemple un terminal mobile de l'individu (en particulier de type smartphone).

De façon préférée, l'équipement client 3 est capable de générer une donnée biométrique à partir d'un trait biométrique de l'individu. Le trait biométrique peut par exemple être la forme du visage, une empreinte digitale, une empreinte palmaire, un iris de l'individu, etc. L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

L'équipement client 3 comprend ou est connecté à ce titre à des moyens d'acquisition biométrique, typiquement un capteur d'image et de manière particulièrement préférée ces moyens d'acquisition biométrique sont les moyens d'acquisition optique 30, par exemple un appareil photographique adapté pour acquérir une photographie du visage en mode « selfie » (on note qu'alternativement des moyens d'acquisition distincts peuvent être utilisés, comme un capteur d'empreinte digitale).

Dans tous les cas, une donnée biométrique de référence utilisée pour authentification de l'individu est avantageusement une donnée pré-enregistrée en présence d'une autorité (voir plus loin), ou une donnée provenant du document d'identité 1 telle que la photographie.

On note que l'équipement 3 peut prendre de nombreux modes de réalisation. Plus précisément et comme l'on verra, il suffit pour la mise en oeuvre de l'invention que l'équipement client 3 puisse obtenir une image acquise du document d'identité 1 d'une façon ou d'une autre, y compris indirectement, et traiter cette image.

Dans tous les cas, comme expliqué l'équipement client 3 peut acquérir une image d'une image du document d'identité 1, i.e. photographier une photocopie plutôt que le document 1 directement, voire d'une photocopie d'une photocopie, etc. Comme l'on verra, il suffira que l'image acquise représente le document 1. On comprendra que le présent procédé n'est limité à aucune façon d'obtenir cette image et aucune nature en particulier (l'image acquise peut être en noir et blanc, déformée, etc.).

On note qu'il est tout à fait possible que d'autres entités soient connectées au serveur 2 et à l'équipement 3, en particulier des serveurs mettent en oeuvre des services consommant les assertions produites par l'équipement 3, i.e. de services souhaitant l'authentification de l'individu, par exemple un serveur d'une banque, d'un hôtel, etc. Notamment, on peut imaginer qu'un tel serveur dispose d'une solution d'authentification classique (par exemple avec un authentificateur FIDO), et va initier le présent procédé (en contactant l'équipement 3) lorsque l'utilisateur souhaite enrôler un nouveau facteur d'authentification. Ce serveur de service peut par exemple mettre en oeuvre une API dédiée à l'interrogation du serveur 2 pour la mise en oeuvre du présent procédé.

Comme l'on verra, le présent procédé permet que ce serveur de service ne stocke aucune information personnelle de l'individu.

### Digital Photo Seal

Dans la suite de la présente description, l'homme du métier pourra se référer aux demande FR1904375 et FR1904406 qui décrivent des mécanismes pouvant être utilisés indépendamment ou en combinaison dans le cadre de l'invention.

De manière connue le présent procédé utilise une information représentative d'une apparence d'une photographie (ou un autre élément graphique du document 1), c'est-à-dire une donnée descriptive d'au moins un fragment de cette photographie tel qu'il apparait, i.e. une « signature », qui va permettre des comparaisons.

On désigne comme information « de référence » l'information représentative de l'apparence « théorique » de la photographie, i.e. tel qu'attendue. Par contraste, on désigne comme information « candidate » l'information représentative de l'apparence constatée de la photographie, i.e. tel que représentée dans une image acquise du document 1. On comprend que cette apparence constatée n'est généralement pas parfaitement identique à l'apparence attendue, du fait des conditions des défauts inhérents à l'acquisition d'une image, et à la variabilité des conditions de prise de vue (éclairage, bougé, distance, etc.).

Néanmoins, ladite information représentative de l'apparence est choisie de telle sorte que si deux photographies ont des apparences qui coïncident (i.e. il s'agit de la même photographie même si les conditions de prise de vue ne sont pas identiques), alors leurs informations représentatives coïncident (i.e. présentent une distance selon une métrique donnée inférieure à un seuil) également.

Ainsi, l'information de référence et l'information candidate coïncident si et seulement si l'apparence constatée et l'apparence attendue de la photographie coïncide, i.e. qu'il s'agit bien de la même photographie, en d'autres termes que la photographie imprimée sur le document d'identité 1 n'a pas été frauduleusement altérée. Cette vérification peut être faite pour chaque autre élément graphique tel qu'une signature. On pourra utiliser comme information représentative de l'apparence de la photographie le « Digital Photo Seal » (DPS) qu'on prendra comme exemple dans la suite de la présente demande, i.e. la donnée de sécurité telle que décrite dans les demandes citées dans l'introduction ou plus précisément la demande EP3206192, basée sur la position de points singuliers de l'élément graphique, ou toute autre « signature » d'un objet graphique tel qu'une photographie.

Le DPS d'une photographie est une caractéristique de cette image qui n'est pas un modèle biométrique, et peut par exemple comprendre un histogramme de gradient orienté (on parle alors d'algorithme à descripteur HOG). On peut alternativement utiliser un algorithme de classification du type employant un réseau de neurones convolutionnel, également connu sous l'acronyme CNN (pour l'anglais Convolutional Neural Network).

### Enrôlement

Au lancement du procédé, on suppose que l'équipement client 3 dispose au moins d'une image acquise dudit document d'identité 1 représentant au moins une photographie d'un individu et une donnée de lecture optique visibles sur ledit document d'identité 1 (dans laquelle sont lisibles les données personnelles de l'individu), et d'une donnée biométrique candidate.

L'équipement client 3 ou le serveur 2 a besoin en outre de disposer d'une première « donnée encodée » (notée SSKD) obtenue par application d'une procédure d'encodage à l'information DPS de référence représentative de l'apparence de la photographie dudit individu visible sur ledit document d'identité 1 et à une première donnée d'aléa (notée RNGD). En pratique, cette première donnée encodée est généralement stockée (au moins initialement) par le serveur 2.

Le serveur 2 n'a quant à lui besoin que de disposer d'une empreinte cryptographique d'une première concaténation de la donnée de lecture optique du document d'identité 1 et la première donnée d'aléa RNGD.

Eventuellement, l'équipement client 3 ou le serveur 2 peut disposer d'un chiffré avec une empreinte cryptographique d'une deuxième concaténation de la donnée de lecture optique du document d'identité 1 et de la première donnée d'aléa RNGD, différente de la première concaténation, de la donnée biométrique de référence dudit individu, et possiblement d'autres données personnelles (à nouveau le chiffré est souvent stocké par le serveur 2).

On comprend qu'aucune de ces données n'est exploitable en soi (en particulier si elles sont toutes stockées sur le serveur 2) car :
- Ladite première donnée encodée SSKD ne permet seule ni de retrouver l'information DPS de référence ni la première donnée d'aléa RNGD ;
- L'empreinte cryptographique d'une première concaténation de la donnée de lecture optique du document d'identité 1 et de la première donnée d'aléa RNGD est une simple empreinte n'apportant aucune information ;
- L'éventuel chiffré de la donnée biométrique n'est lisible par personne sans la clé.

Dans un mode de réalisation préféré, le procédé comprend une étape préalable (a0) « d'enrôlement » permettant d'intégrer un individu et son document d'identité 1 et de générer les données dont doit disposer le serveur 2 et/ou l'équipement client 3. Il faut ici faire la différence avec un enrôlement d'un facteur d'authentification qui peut être le résultat du présent procédé.

Cette étape (a0) peut être mise en oeuvre longtemps avant le reste du procédé, et ne nécessite pas d'être réitérée à chaque occurrence du procédé (à noter qu'on peut prévoir de la répéter de temps à autre par sécurité et pour mettre à jour les données personnelles, mais cela reste optionnel). On peut ainsi considérer que lesdites données référencées ci-avant sont prédéfinies pour la mise en oeuvre du procédé. Ce procédé d'enrôlement de données du document d'identité 1 de l'individu peut être réalisé par le serveur 2 ou par le serveur d'une autorité gouvernementale, et alors les données obtenues sont transmises au serveur 2 et/ou à l'équipement client 3. L'enrôlement commence par une étape (A) d'obtention d'une photographie dudit individu visible sur ledit document d'identité 1, d'une donnée de lecture optique du document d'identité 1, et le cas échéant de la donnée biométrique de référence dudit individu.

Cette étape (A) peut elle-même être mise en oeuvre au moyen d'une image du document d'identité 1 (comme ce sera expliqué pour le procédé d'authentification), mais de façon préférée, pour éviter les problèmes de numérisation et de perte de qualité, ces données (i.e. la photographie, la donnée de lecture optique et/ou la donnée biométrique de référence) sont manipulées directement, en particulier si l'enrôlement est effectué par une autorité gouvernementale. Cela permet par ailleurs une éventuelle mise à jour des données, voir plus loin.

Dans une étape (B) est comme expliqué mise en oeuvre l'extraction par analyse de ladite photographie de l'information (notée DPS par commodité, bien que comme expliqué le présent procédé n'est pas limité au Digital Photo Seal) de référence représentative de l'apparence de ladite photographie, au moyen d'un algorithme connu.

Ensuite, dans une étape (C) la première donnée d'aléa RNGD est générée, de sorte à calculer la première donnée encodée (notée SSKD pour SSK-DATA par commodité, bien que comme expliqué le présent procédé n'est pas limité au secure sketch) par application d'une procédure d'encodage à ladite information DPS de référence représentative de l'apparence de ladite photographie et à ladite première donnée d'aléa RNGD, i.e. SSKD=enc(DPS, RNGD).

La première donnée d'aléa RNGD est comme son nom l'indique une donnée de valeur aléatoire apportant de l'aléa, qui a une importance car sa connaissance va permettre de prouver que l'on dispose bien du document d'identité 1.

De préférence, la procédure d'encodage est une procédure d'esquisse d'un algorithme de type « secure sketch ». Cette procédure d'esquisse est connue de l'homme du métier. Elle notamment décrite dans le document « Fuzzy Extractors: How to Generate Strong Keys from Biometrics and Other Noisy Data », par Dodis et al. (voir la définition 3 donnée en page 11 de ce document).

D'autres procédures d'encodage peuvent être toutefois être utilisées par l'unité de traitement 4 en lieu et place d'une procédure d'esquisse (par exemple des procédures d'algorithmes de type « fuzzy extractor » et de façon générale la logique floue).

A noter que la procédure d'encodage peut être appliquée directement à ladite information de référence représentative de l'apparence de ladite photographie, mais également indirectement, c'est-à-dire à des données dérivées de cette information de référence pour rajouter de l'entropie. Par exemple, on peut utiliser comme donnée dérivée une combinaison de l'information de référence avec la donnée de lecture optique, notamment un certain nombre des premiers bits de son empreinte cryptographique (voir plus loin). En particulier, cette combinaison peut être un « ou exclusif », i.e. XOR(DPS;HMRZ), HMRZ étant les n premiers bits de l'empreinte cryptographique de la donnée de lecture optique (dans l'exemple où c'est la MRZ) où n est le nombre de bits de l'information de référence (le même nombre de bits est nécessaire pour le XOR).

Dans tous les cas, la procédure d'encodage permet de « masquer » la première donnée d'aléa RNGD par le résultat du traitement DPS de la photographie, mais de manière retrouvable au moyen d'une procédure de décodage complémentaire de la procédure d'encodage.

Lorsque la procédure d'encodage utilisée pour l'enrôlement est une procédure d'esquisse d'un algorithme de type « secure sketch », la procédure de décodage est la procédure récupération (« recovery » en anglais) du même algorithme de type « secure sketch ». Une telle procédure de récupération est également connue de l'homme du métier (voir la définition 3 donnée en page 11 du document « Fuzzy Extractors: How to Generate... » susmentionné).

Plus précisément, si on note DpsRef l'information de référence et DpsCand une information candidate (avec SSKD=enc(RNGD,DpsRef)), alors les procédures d'encodage et de décodage sont telles que si DpsCand est suffisamment proche de DpsRef (i.e. différent de moins d'un seuil, ce qui est normalement le cas si on extrait l'information représentative de la même photographie que celle à partir de laquelle on a généré l'information de référence, même si on note qu'il reste impossible que les deux valeurs coïncident, on aura toujours |DpsCand-DpsRef|>0) alors la première donnée décodée est égale à la première donnée d'aléa RNGD.

Si au contraire DpsCand n'est pas suffisamment proche de DpsRef, alors la première donnée décodée n'est pas la bonne valeur de la première donnée d'aléa.

Mathématiquement, la procédure de décodage donne, pour une valeur de la première donnée encodée SSKD et pour une valeur d'information candidate DpsCand, « la valeur x=dec(SSKD, DpsCand) telle qu'il existe une valeur ε de norme inférieure à un seuil donné vérifiant SSKD=enc(x,DpsCand+e) », x étant égal à la valeur de la première donnée d'aléa RNGD si on a bien DpdCand+ε=DpsRef.

On rappellera que de telles procédures d'encodage et de décodage sont connues de l'homme du métier, et peuvent faire l'objet de nombreux modes de réalisation. Il sera d'ailleurs possible d'augmenter l'entropie de la donnée encodée en appliquant la procédure d'encodage à davantage de données que seules l'information représentative de l'apparence de ladite photographie et la première donnée d'aléa.

Dans une étape (D) sont enfin stockées sur les moyens de stockage de données 22 du serveur 2 et/ou les moyens de stockage de données 32 de l'équipement client 3 (le cas échéant après transmission) :
- Ladite première donnée encodée SSKD ;
- L'empreinte cryptographique d'une première concaténation de la donnée de lecture optique du document d'identité 1 et de la première donnée d'aléa RNGD ;
- L'éventuel chiffré avec l'empreinte cryptographique d'une deuxième concaténation de la donnée de lecture optique du document d'identité 1 et de la première donnée d'aléa RNGD, différente de la première concaténation, de l'au moins une donnée biométrique de référence dudit individu.

Ces données, dans le cas où elles sont stockées sur le serveur 2, peuvent être indexées dans la mémoire 22 avec une empreinte cryptographique d'un identifiant du document d'identité 1, généralement obtenu de la MRZ.

Par empreinte cryptographique, ou haché (en anglais « hash »), on entend le résultat d'une fonction de hachage cryptographique prédéterminée.

De manière préférée, les première et deuxième concaténations correspondent à des concaténations dans deux sens différents, par exemple MRZ|RNGD pour la première concaténation et RNGD|MRZ pour la deuxième concaténation, mais on pourra utiliser toute autre construction telle que deux concaténations dans le même ordre mais incluant un caractère prédéterminé au milieu, par exemple MRZ|1|RNGD et MRZ|2|RNGD.

Il est entendu que la donnée de lecture optique du document d'identité 1 et la première donnée d'aléa RNGD peuvent être considérés comme des séquences de bits. Le nombre de bits de la concaténation est ainsi la somme des nombres de bits respectifs de la donnée de lecture optique du document d'identité 1 et de la première donnée d'aléa RNGD.

Par commodité, on note première empreinte ladite empreinte cryptographique de la première concaténation (h(MRZ|RNGD) en particulier), et deuxième empreinte l'empreinte cryptographique de la deuxième concaténation (h(RNGD|MRZ) en particulier).

L'astuce de ces multiples concaténations permet la formation de plusieurs empreintes complètement indépendantes à partir des mêmes données. En effet, connaissant la première empreinte (qui est stockée sur la mémoire 22, et qui pourrait donc être obtenue par un pirate), il n'est pas possible d'obtenir la deuxième empreinte. Il reste nécessaire pour obtenir celle-ci de détenir la valeur de la première donnée d'aléa RNGD, laquelle ne peut être retrouvée qu'en disposant de l'information de référence. Ainsi, l'empreinte biométrique de référence chiffrée avec la deuxième empreinte cryptographique (i.e. la deuxième empreinte est utilisée comme clé) reste accessible seulement au détendeur du document d'identité 1, de sorte que le serveur 2 ne peut manipuler ni ne connaitre les données personnelles de l'utilisateur, qui peuvent être stockées en toute sécurité.

La première empreinte peut être associée dans le serveur 2 à un descripteur de l'état du document d'identité 1, par exemple « OK », « Expiré » ou « KO ».

A noter que le procédé d'enrôlement peut être répété à intervalles réguliers pour vérifier ou mettre à jour les données personnelles. Les données récentes et fiables pourront être récupérées depuis une entité gouvernementale. De surcroit, un document d'identité 1 n'a qu'une durée de vie limitée, et doit régulièrement être renouvelé.

Selon un mode de réalisation préféré, l'équipement client 3 ou le serveur 2 dispose avantageusement (à la place du chiffré de la donnée biométrique de référence) d'une deuxième donnée encodée (notée SSKT, pour SSK-TEMPLATE) obtenue par application d'une procédure d'encodage (typiquement la même procédure d'encodage que pour la première donnée encodée) à la donnée biométrique de référence et à une deuxième donnée d'aléa (notée RNGT) ; et le serveur 2 dispose en outre d'une empreinte cryptographique construite à partir de la deuxième donnée d'aléa RNGT. A nouveau toutes ces données peuvent être stockées (au moins initialement) sur les moyens de stockage de données 22 du serveur 2 (et associées aux autres données)

Ladite empreinte cryptographique construite à partir de la deuxième donnée d'aléa RNGT, dite troisième empreinte cryptographique, peut être une empreinte cryptographique directement de la deuxième donnée d'aléa RNGT, ou d'une fonction quelconque (par exemple une concaténation) de la deuxième donnée d'aléa RNGT et d'une autre donnée, avantageusement de la première empreinte cryptographique (l'empreinte cryptographique d'une première concaténation de la donnée de lecture optique du document d'identité 1 et de la première donnée d'aléa RNGD).

On comprend qu'aucune de ces données n'est à nouveau exploitable en soi car :
- Ladite deuxième donnée encodée SSKT ne permet seule ni de retrouver la donnée biométrique de référence ni la deuxième donnée d'aléa RNGT ;
- L'empreinte cryptographique construite à partir de la deuxième donnée d'aléa RNGT est une simple empreinte n'apportant aucune information.

Dans un tel mode de réalisation, l'étape (a0) d'enrôlement peut en outre comprendre :
- A l'étape (A) ou à l'étape (B), l'obtention de ladite donnée biométrique de référence (notée TempRef pour template de référence), par exemple depuis la photographie du document d'identité 1 ;
- A l'étape (C), la génération de la deuxième donnée d'aléa RNGT de sorte à calculer la deuxième donnée encodée SSKT par application de ladite procédure d'encodage, i.e. SSKT=enc(TempRef, RNGT) ;
- A l'étape (D) le stockage sur les moyens de stockage de données 22 du serveur 2 et/ou les moyens de stockage de données 32 de l'équipement client 3 (le cas échéant après transmission) de ladite deuxième donnée encodée SSKT et de l'empreinte cryptographique construite à partir de la deuxième donnée d'aléa RNGT.

A noter que ces actions supplémentaires liées à l'enrôlement biométrique peuvent être mise en oeuvre dans de nouvelles étapes (A') à (D'), i.e. pas nécessairement simultanément avec les actions liées à l'enrôlement du document d'identité 1.

Par ailleurs, il reste possible de mettre en oeuvre un procédé d'authentification forte de l'individu sans nécessiter ni de chiffré de la donnée biométrique de référence ni de deuxième donnée d'aléa RNGT et de deuxième donnée encodée SSKT, notamment en la stockant directement sur l'équipement client 3 (en clair), voire sur un serveur dédié à la biométrie de type WebBIO, voir plus loin.

### Authentification

On suppose à présent que l'enrôlement a été réalisé avec succès, et que le document d'identité est à présent utilisable.

Dans un mode de réalisation préféré, le procédé d'authentification commence par une étape (a) d'acquisition d'une façon ou d'une autre (par exemple via les moyens d'acquisition 30 de l'équipement client 3) d'une image du document d'identité 1, l'image représentant au moins la photographie de l'individu et la donnée de lecture optique du document d'identité 1 (la MRZ) visibles sur ledit document d'identité 1. Préférentiellement, ladite image représente tout le document d'identité 1, du moins toute une face. Comme expliqué, il peut être nécessaire d'acquérir plusieurs images, par exemple pour voir toutes les faces.

Typiquement, c'est l'individu qui prend en photo son document d'identité 1 avec son terminal mobile, le cas échéant sur requête émise par le serveur souhaitant l'authentification forte (par exemple pour le service duquel il a lancé une procédure de recouvrement, notamment via une API dédiée).

En ce qui concerne la donnée biométrique candidate, « fraîche », celle-ci peut être obtenue lors de l'étape préalable (a). Plus précisément, une fois l'image du document d'identité 1 acquise, le serveur 2 (ou à nouveau le serveur tiers) peut alors réclamer l'acquisition de la donnée biométrique candidate.

Il est important de comprendre que si l'étape d'enrôlement (a0) peut être mise en oeuvre des semaines avant la mise en oeuvre de l'authentification, l'étape (a) est au pire mise en oeuvre quelques minutes avant le reste du procédé, pour garantir la « fraicheur » de la donnée biométrique candidate.

Ainsi, l'étape (a) comprend avantageusement la génération de la donnée biométrique candidate à partir d'un trait biométrique fourni par les moyens d'acquisition biométrique de l'équipement client 3 (i.e. typiquement les moyens d'acquisition optique 30). Cela signifie par exemple que l'individu prend tout d'abord une photographie de son document d'identité 1, puis une photographie de son visage. Pour garantir la fraicheur de la donnée candidate, l'étape (a) pourra comprendre l'horodatage de la donnée biométrique candidate au moyen d'un marqueur temporel (appelé « timestamp » en anglais).

L'homme du métier saura mettre en oeuvre un tel horodatage en utilisant des techniques connues, et avantageusement on utilise comme marqueur temporel un nonce (i.e. un nombre arbitraire, c'est-à-dire un aléa, à usage unique, de l'anglais « number used once »).

L'objectif de la suite du procédé est de vérifier que l'étape (a) s'est bien déroulée comme décrit précédemment, et qu'on n'est pas en présence d'un faux (par exemple une image qui aurait été modifiée frauduleusement) ou d'une usurpation (un individu qui n'est pas le porteur du document d'identité 1).

Dans une étape (b), les moyens de traitement de données 21, 31 de l'équipement client 3 ou du serveur 2 analysent l'image, de sorte à extraire :
- une information (DPS) candidate représentative de l'apparence de la photographie tel que représenté dans l'image acquise ;
- la donnée de lecture optique du document d'identité 1

L'extraction de l'information candidate comprend l'identification de la photographie qui apparait dans l'image, et l'obtention de l'information candidate de la même façon que l'information de référence a été obtenue lors de l'enrôlement. L'identification de la photographie peut être faite grâce à des modèles et des masques (en effet, les documents d'identité ont toujours la même organisation), et ainsi, l'analyse de l'image peut comprendre la reconnaissance d'un contour du document d'identité 1, le recadrage de ce contour, et l'application des masques prédéterminés. Pour cela, des réseaux de neurones à convolutions adaptés pourront être utilisés astucieusement. Similairement, en ce qui concerne la donnée de lecture optique il existe des algorithmes permettant son extraction automatique, ce d'autant plus que les zones de type MRZ sont tout spécialement prévues pour être lues facilement par un ordinateur.

Une fois que la photographie a été « isolée » sur l'image, on applique les mêmes algorithmes que ceux qui ont été appliqués sur la photographie d'origine pour obtenir les informations candidates représentatives de l'apparence de la photographie tel que représenté.

On comprend que les informations de référence et candidate devront être obtenues de manière identique de sorte à pouvoir être comparées.

Selon un premier mode de réalisation, l'étape (b) est mise en oeuvre par le serveur 2, conformément à ce qui est décrit dans la demande FR1904375. Ce dernier est supposé stocker la première donnée encodée, et l'étape (a) comprend à ce titre la transmission au serveur 2 de ladite image acquise du document d'identité 1. Selon un deuxième mode de réalisation, l'étape (b) est directement mise en oeuvre par l'équipement client 3 conformément à ce qui est décrit dans la demande FR1904406. De manière préférée, dans ce second mode de réalisation, l'étape (b) comprend l'interrogation du serveur 2 de sorte à récupérer au moins ladite première donnée encodée SSKD si elle est stockée sur ce serveur 2, par exemple en lui fournissant l'empreinte cryptographique de l'identifiant du document 1 (cet identifiant pouvant être obtenu de la MRZ par exemple) : le serveur 2 transmet la première donnée encodée associée à l'empreinte reçue. On note qu'alternativement, ladite première donnée encodée peut avoir été fournie il y a longtemps et stockée depuis sur les moyens de stockage de données 32 de l'équipement client 3.

Dans tous les cas, dans une étape (c), les moyens de traitement de données 21, 31 du serveur 2 ou de l'équipement client 3 calculent une première donnée décodée par application d'une procédure de décodage à ladite information candidate (DPS) représentative de l'apparence de ladite photographie et à ladite première donnée encodée.

Comme expliqué, la procédure de décodage (et la procédure d'encodage) est telle que ladite première donnée décodée correspond à la première donnée d'aléa RNGD si ladite information candidate représentative de l'apparence de ladite photographie coïncide avec l'information de référence représentative de l'apparence de ladite photographie. En d'autres termes, si l'information de référence et l'information candidate sont suffisamment proches, la valeur décodée correspondra à la valeur d'aléa RNGD utilisée pour obtenir cette première donnée encodée SSKD.

De façon générale, le résultat d'une comparaison de l'information candidate et de l'information de référence doit montrer qu'elles sont identiques, ou du moins présenter une distance inférieure à un seuil d'erreur prédéterminé. Par exemple, pour les éléments graphiques de type photographie, des données de sécurité de type Digital Photo Seal coïncident si elle différent de moins de 10%.

On comprend ainsi que la valeur de la première donnée d'aléa « masquée » par le DPS peut être récupérée si l'utilisateur dispose d'une photographie identique à celle utilisée lors de l'enrôlement dont est tirée l'information de référence.

Dans une étape (d), les moyens de traitement de données 21, 31 vérifient qu'une empreinte cryptographique d'une première concaténation de la donnée de lecture optique extraite et de la donnée décodée coïncide avec l'empreinte cryptographique de la première concaténation de la donnée de lecture optique du document d'identité 1 et de la donnée d'aléa stockée sur les moyens de stockage de données 22 du serveur 2.

En d'autres termes, le serveur 2 ou l'équipement client 3 tente de reconstituer la première empreinte en effectuant la même première concaténation de la donnée de lecture optique extraite et de la première donnée décodée.

Si :
- la donnée de lecture optique extraite coïncide avec la donnée de lecture optique utilisée lors de l'enrôlement ; et
- la première donnée décodée coïncide avec la première donnée d'aléa RNGD;

Alors la première concaténation donnera exactement le même résultat et on arrivera à nouveau à la première empreinte.

Dans tous les autres cas, l'entropie des fonctions de hachage cryptographique fait qu'on arrivera à un résultat très différent. Si le document 1 a été altéré (par exemple en remplaçant la photographie), alors les informations candidates et de référence correspondantes ne coïncideront pas, on obtiendra donc une fausse valeur de l'aléa et donc de la première empreinte, et l'authentification sera rejetée.

A noter que si c'est l'équipement client 3 qui a jusque-là mis en oeuvre les étapes décrites, il est nécessaire d'informer le serveur 2 du résultat de la vérification. Cependant, la bonne valeur de la première empreinte peut être connue, ne serait-ce d'une précédente authentification de l'individu. C'est pourquoi l'équipement client 3 va avantageusement prouver qu'il a obtenu cette première empreinte de manière correcte, i.e. à partir du document d'identité 1, et ce de manière non-interactive, c'est-à-dire avec seulement qu'un « aller» d'information de l'équipement client 3 vers le serveur 2, et pas de « retour ». Et surtout comme expliqué, le serveur 2 ne va recevoir ni la première donnée d'aléa RNGD, ni l'information candidate représentative de l'apparence de ladite photographie, ni la donnée de lecture optique (ni aucune donnée permettant de remonter jusqu'à ces dernières), bien qu'il soit pourtant possible pour le serveur 2 de savoir avec certitude que la première empreinte a été correctement calculée. De surcroit, toutes les données transmises ne sont pas sensibles, et pourraient être interceptées sans que cela ne pose de problème.

Pour cela, dans l'étape (d) les moyens de traitement de données 31 de l'équipement client 3 agissant comme entité de preuve génèrent avantageusement une preuve à divulgation nulle de connaissances du calcul de ladite empreinte cryptographique à partir de la première concaténation de la donnée de lecture optique extraite et de la première donnée décodée, i.e. que la première empreinte cryptographique a été effectivement calculée, et de manière correcte, ladite preuve étant transmise par l'équipement client 3 au serveur 2 ladite preuve à divulgation nulle de connaissance avec l'empreinte cryptographique calculée.

Plus précisément, ladite preuve à divulgation nulle de connaissances garantit l'affirmation suivante : « étant donnée une empreinte cryptographique H, il existe une donnée de lecture optique et une première donnée d'aléa RNGD (la donnée décodée) telles que leur première concaténation a pour empreinte cette empreinte cryptographique H donnée ». L'homme du métier pourra consulter le document FR1904406 pour plus d'informations.

Ainsi, les moyens de traitement de données 21 du serveur 2 n'ont plus qu'à vérifier que la preuve à divulgation nulle de connaissance est valide, et que l'empreinte cryptographique reçue coïncide avec celle de la première concaténation d'une donnée de lecture optique dudit document d'identité 1 et d'une première donnée d'aléa dont dispose le serveur 2.

Si la preuve n'est pas valide, c'est que la première empreinte cryptographique n'a pas été valablement obtenue, et donc que potentiellement l'individu ne dispose pas du document d'identité et tente d'usurper une identité. Si la preuve est valide mais que l'empreinte cryptographique reçue ne correspond pas à celle dont dispose l'entité de vérification 2, c'est que la première donnée décodée ne correspond pas au premier aléa ou que la donnée de lecture extraite n'est pas celle d'origine, i.e. que le document d'identité 1 a été falsifié (au niveau de la photographie ou de la donnée de lecture optique). Une alerte pour utilisation frauduleuse peut être émise.

Dans l'étape (d) les moyens de traitement de données 21, 31 vérifient en outre que la donnée biométrique de référence et la donnée biométrique candidate de l'individu coïncident, le procédé impliquant donc impliquant une comparaison entre la donnée biométrique candidate et la donnée biométrique de référence. A noter qu'un contrôlé du vivant peut être impliqué, de sorte à vérifier par exemple que la donnée biométrique de référence n'est pas issue d'un faux (par exemple un masque de visage ou un doigt en résine).

Cette étape peut être mis en oeuvre de nombreuses manières connues, en utilisant l'équipement client 3, le serveur 2 voire un serveur de biométrie dédié.

On note que toutes les combinaisons sont possibles : chacun de l'équipement client 3 et du serveur 2 peut mettre en oeuvre 0, 1 ou 2 des vérifications de l'étape (d).

Il est par exemple tout à fait possible que le serveur 2 reçoive dans l'étape (a) à la fois l'image acquise du document d'identité 1 et la donnée biométrique candidate. De manière particulièrement préférée on peut même imaginer que lors de l'étape (a), le serveur 2 reçoive d'abord l'image acquise du document d'identité 1, puis requiert à l'équipement 1 la donnée biométrique candidate qui est lui alors transmise dans un second temps.

Alternativement ou en complément, le serveur 2 ou l'équipement 3 peut transmettre (le cas échéant retransmettre) la donnée biométrique candidate à un serveur de confiance dédié à la biométrie, stockant la donnée biométrique de référence, lequel met en oeuvre la comparaison et envoie le résultat au serveur.

Dans tous les cas, la mise en oeuvre de la comparaison comprend typiquement le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne. Ce type de calcul de distance est connu de l'Homme du Métier et ne sera pas décrit plus en détail.

Dans le cas où le serveur 2 ou l'équipement client 3 stocke un chiffré de la donnée biométrique de référence dudit individu avec une empreinte cryptographique d'une deuxième concaténation de la donnée de lecture optique du document d'identité 1 et de la donnée d'aléa (la deuxième empreinte cryptographique), l'étape (d) comprend le déchiffrement de cette donnée biométrique de référence, au moyen de l'empreinte cryptographique d'une deuxième concaténation de la donnée de lecture optique extraite et de la donnée décodée (chacune obtenue dans l'étape (c)), en vue de pouvoir réaliser la comparaison. A nouveau l'homme du métier pourra se référer à la demande FR1904375.

Dans le cas où on a une deuxième donnée encodée SSKT obtenue par application d'une procédure d'encodage à une donnée biométrique de référence et à une deuxième donnée d'aléa RNGT, et une empreinte cryptographique construite à partir de la deuxième donnée d'aléa RNGT, on peut utiliser une procédure de décodage pour vérifier si la donnée biométrique candidate et la donnée biométrique de référence coïncident, de la même manière que ce qui a été fait pour l'information de type DPS sur la photographie.

A nouveau, lorsque la procédure d'encodage utilisée pour l'enrôlement est une procédure d'esquisse d'un algorithme de type « secure sketch », la procédure de décodage est la procédure récupération (« recovery » en anglais) du même algorithme de type « secure sketch », et l'homme du métier pourra utiliser d'autres procédures.

Mathématiquement, la procédure de décodage donne, pour une valeur de la deuxième donnée encodée SSKT et pour une donnée biométrique candidate TempCand, « la valeur x=dec(SSKT, TempCand) telle qu'il existe une valeur ε de norme inférieure à un seuil donné vérifiant SSKT=enc(x,TempCand+ε) », x étant égal à la valeur de la première donnée d'aléa RNGT si on a bien TempCand+ε=TempRef. Ainsi, l'étape (c) comprend en outre avantageusement le calcul par les moyens de traitement de données 21, 31 du serveur 2 ou de l'équipement client 3 de
- une deuxième donnée décodée par application d'une procédure de décodage à ladite donnée biométrique candidate et à la deuxième donnée encodée (à nouveau la donnée encodée est telle que ladite deuxième donnée décodée correspond à la deuxième donnée d'aléa RNGT si ladite donnée biométrique candidate coïncide avec la donnée biométrique de référence) ;
- une empreinte cryptographique construite à partir de la deuxième donnée décodée (on comprendra que cette empreinte cryptographique doit être construite de la même façon que la troisième empreinte cryptographique à partir de la deuxième donnée d'aléa RNGT, notamment l'empreinte cryptographique d'une concaténation de la deuxième donnée d'aléa RNGT et de la première empreinte cryptographique).

Dans tous les cas la comparaison des données biométriques peut être faite par les moyens de traitement de données 21 du serveur 2, mais il est préférable qu'elle soit faite sur l'équipement client 3 pour garantir totalement la vie privée de l'individu. Pour cela, on peut utiliser à nouveau un protocole cryptographique générant une « preuve » que la donnée biométrique candidate et la donnée biométrique de référence coïncident, cette preuve ne révélant rien d'autre que le fait que ces données biométriques sont bien possédées par le producteur de la preuve.

En d'autres termes, on peut utiliser jusqu'à deux preuves à divulgation nulle de connaissance :
- la première preuve est la preuve du calcul de ladite empreinte cryptographique à partir de la première concaténation de la donnée de lecture optique extraite et de la première donnée décodée ;
- la deuxième preuve est une preuve du fait que la donnée biométrique candidate et la donnée biométrique de référence coïncident.

Dans ce cas, l'étape (d) comprend avantageusement la génération par les moyens de traitement de données 31 de l'équipement client 3 de la preuve à divulgation nulle de connaissances du fait que la donnée biométrique candidate et la donnée biométrique de référence coïncident, qui est en particulier une preuve du calcul de ladite empreinte cryptographique à partir de la deuxième donnée décodée, cette preuve ne révélant rien d'autre que le fait que la deuxième donnée décodée (i.e. la deuxième donnée d'aléa RNGT) sont bien possédées par le producteur de la preuve. A nouveau, la preuve vise à garantir que la troisième empreinte cryptographique a été effectivement calculée, et de manière correcte.

Plus précisément, ladite preuve à divulgation nulle de connaissances garantit l'affirmation suivante : « étant donnée une empreinte cryptographique T, il existe une deuxième donnée d'aléa RNGT (et le cas échéant une donnée de lecture optique) telle qu'une fonction donnée de cette deuxième donnée d'aléa RNGT a pour empreinte cette empreinte cryptographique T donnée ». Dans le cas précis où la troisième empreinte est l'empreinte cryptographique d'une concaténation de la deuxième donnée d'aléa RNGT et de la première empreinte cryptographique, l'affirmation garantie est la suivante : « étant donnée une empreinte cryptographique T, il existe une deuxième donnée d'aléa RNGT et une autre empreinte cryptographique H telle qu'une concaténation de cette deuxième donnée d'aléa RNGT et de cette autre empreinte cryptographique H a pour empreinte ladite empreinte cryptographique T donnée ».

La deuxième preuve à divulgation nulle de connaissance peut être générée de la même façon que la première preuve à divulgation nulle de connaissance, et transmise au serveur 2 avec la nouvelle empreinte cryptographique calculée (la troisième empreinte), voir encore le document FR1904406.

Si toutes les vérifications ont été effectuées avec succès, le serveur 2 accepte l'authentification de l'individu et transmet typiquement un « token » au serveur ayant requis l'authentification/le recouvrement de l'individu. Plus précisément, si le procédé est un procédé d'enrôlement d'un authentificateur en particulier FIDO, cet enrôlement est alors réalisé. En d'autres termes, le procédé comprend avantageusement une étape d'enrôlement d'un authentificateur. Si cet authentificateur à enrôler est directement l'équipement 3, il peut soumettre un secret ou bien soumettre la clé publique correspondant à une paire de clé dont il détient la clé privée lui permettant d'être utilisé comme authentificateur de l'individu. Alternativement, il pourrait recevoir un tel secret.

On notera qu'au lieu de mettre simultanément en oeuvre la vérification du document 1 et la vérification biométrique (i.e. utiliser les mêmes étapes (a) à (d)), il est tout à fait possible de mettre en oeuvre les procédés l'un après l'autre, c'est-à-dire qu'on aura des étapes (a') à (d') pour le procédé mis en oeuvre en second (en particulier la vérification biométrique, même si l'ordre inverse est possible).

On comprend que le présent procédé limite au maximum la nécessité d'informations personnelles et les fuites potentielles associées, tout en garantissant un niveau de sécurité maximum.

### Serveur

Selon un deuxième aspect, est proposé l'ensemble du serveur 2 et de l'équipement client 3 connectés, pour la mise en oeuvre du procédé selon le premier aspect, i.e. d'authentification d'un individu porteur d'un document d'identité.

Comme expliqué, l'équipement client 3 et/ou le serveur 2 comprennent des moyens de traitement de données 21, 31 (selon le cas où il y a directement traitement des données par le serveur 2, ou si c'est l'équipement 3 qui fait ce traitement et transmet au serveur 2 une preuve à divulgation nulle de connaissance de leur bonne exécution), configurés pour :
- Extraire, par analyse d'une image acquise d'un document d'identité 1 représentant au moins une photographie d'un individu et une donnée de lecture optique visibles sur ledit document d'identité 1 :
   ∘ une information candidate représentative de l'apparence de ladite photographie tel que représentée dans l'image acquise ;
   ∘ ladite donnée de lecture optique tel que représentée dans l'image acquise ;
- Calculer une première donnée décodée par application d'une procédure de décodage à ladite information candidate représentative de l'apparence de ladite photographie et à la première donnée encodée, telle que ladite première donnée décodée correspond à une première donnée d'aléa si ladite information candidate représentative de l'apparence de ladite photographie coïncide avec une information de référence représentative de l'apparence de ladite photographie, le serveur 2 disposant d'une empreinte cryptographique d'une première concaténation de ladite donnée de lecture optique dudit document d'identité 1 et ladite première donnée d'aléa, dite première empreinte cryptographique ;
- vérifier que :
   - une empreinte cryptographique d'une première concaténation de la donnée de lecture optique extraite et de la donnée décodée coïncide avec ladite première empreinte cryptographique dont dispose le serveur 2 ; et
   - une donnée biométrique de référence et la donnée biométrique candidate de l'individu coïncident.

L'équipement client 3 peut en outre comprendre (ou être connecté) à des moyens d'acquisition optique 30 et/ou des moyens d'acquisition biométrique, en particulier les moyens d'acquisition optique 30, pour l'acquisition de la donnée biométrique candidate.

### Produit programme d'ordinateur

Selon un troisième et un quatrième aspects, l'invention concerne un produit programme d'ordinateur comprenant des instructions de code pour l'exécution (en particulier sur les moyens de traitement de données 21 du serveur 2 et les moyens de traitement de données 31 de l'équipement client 3) d'un procédé selon le premier aspect de l'invention, ainsi que des moyens de stockage lisibles par un équipement informatique (une mémoire 22 du serveur 2 et une mémoire 32 de l'équipement client 3) sur lequel on trouve ce produit programme d'ordinateur.

## Revendications

1. Procédé d'authentification forte d'un individu mis en oeuvre par un serveur (2) et un équipement client (3) connectés ;
l'équipement client (3) disposant d'une donnée biométrique candidate de l'individu et d'une image acquise d'un document d'identité (1) représentant au moins une photographie dudit individu et une donnée de lecture optique visibles sur ledit document d'identité (1), et le serveur (2) disposant d'une empreinte cryptographique d'une première concaténation de ladite donnée de lecture optique dudit document d'identité (1) et d'une première donnée d'aléa, dite première empreinte cryptographique ;
le procédé étant **caractérisé en ce qu'**il comprend la mise en oeuvre par des moyens de traitement de données (21, 31) du serveur (2) et/ou de l'équipement client (3) d'étapes de ;
(b) Extraction, par analyse de ladite image acquise dudit document d'identité (1), de :
∘ une information candidate représentative de l'apparence de ladite photographie tel que représentée dans l'image acquise ;
∘ ladite donnée de lecture optique tel que représentée dans l'image acquise ;
(c) Calcul d'une première donnée décodée par application d'une procédure de décodage à ladite information candidate représentative de l'apparence de ladite photographie et à une première donnée encodée, telle que ladite première donnée décodée correspond à la première donnée d'aléa si ladite information candidate représentative de l'apparence de ladite photographie coïncide avec une information de référence représentative de l'apparence de ladite photographie ;
(d) Vérification que :
- une empreinte cryptographique d'une première concaténation de la donnée de lecture optique extraite et de la donnée décodée coïncide avec ladite première empreinte cryptographique dont dispose le serveur (2) ; et
- une donnée biométrique de référence et la donnée biométrique candidate de l'individu coïncident.

2. Procédé selon la revendication 1, comprenant une étape (a) d'acquisition préalable de ladite image dudit document d'identité (1) représentant au moins une photographie d'un individu et une donnée de lecture optique visibles sur ledit document d'identité (1) par des moyens d'acquisition optique (30) de l'équipement client (3), et la génération de la donnée biométrique candidate à partir d'un trait biométrique fourni par des moyens d'acquisition biométrique.

3. Procédé selon la revendication 2, dans lequel les moyens d'acquisition biométrique sont les moyens d'acquisition optique (30) de l'équipement client (3), l'équipement client (3) étant un équipement électronique personnel audit individu, en particulier de type terminal mobile ou carte à puce

4. Procédé selon l'une des revendication 1 à 3, dans lequel le serveur (2) ou l'équipement (3) dispose d'un chiffré de la donnée de référence biométrique dudit individu avec une empreinte cryptographique d'une deuxième concaténation de la donnée de lecture optique du document d'identité (1) et de la première donnée d'aléa, différente de la première concaténation ; l'étape (c) comprenant le déchiffrement de l'au moins une donnée biométrique de référence dudit individu chiffrée, au moyen de l'empreinte cryptographique d'une deuxième concaténation de la donnée de lecture optique extraite et de la première donnée décodée.

5. Procédé selon l'une des revendication 1 à 3, dans lequel le serveur (2) dispose d'une empreinte cryptographique construite à partir d'une deuxième donnée d'aléa, dite troisième empreinte cryptographique ; l'étape (c) comprenant le calcul par les moyens de traitement de données (21, 31) du serveur (2) ou de l'équipement client (3) d'une deuxième donnée décodée par application d'une procédure de décodage à ladite donnée biométrique candidate et à une deuxième donnée encodée, telle que ladite deuxième donnée décodée correspond à la deuxième donnée d'aléa si ladite donnée biométrique candidate coïncide avec la donnée biométrique de référence ; ladite vérification de l'étape (d) que la donnée biométrique de référence et la donnée biométrique candidate de l'individu coïncident comprenant la vérification qu'une empreinte cryptographique construite à partir de la deuxième donnée décodée de la même manière que la troisième empreinte cryptographique est construite à partir de la deuxième donnée d'aléa coïncide avec ladite troisième empreinte cryptographique dont dispose le serveur (2).

6. Procédé selon l'une des revendications 1 à 5, dans lequel l'étape (a) comprend la réception par le serveur (2) de l'image acquise dudit document d'identité (1) et de la donnée biométrique candidate depuis l'équipement client (3), les étapes (b) à (d) étant mise en oeuvre par les moyens de traitement de données (21) du serveur (2).

7. Procédé selon l'une des revendications 1 à 5, dans lequel les étapes (b) et (c) sont mise en oeuvre par les moyens de traitement de données (31) de l'équipement client (3), l'étape (c) comprenant le calcul de l'empreinte cryptographique d'une première concaténation de la donnée de lecture optique extraite et de la première donnée décodée, et la génération d'une preuve à divulgation nulle de connaissances du calcul de ladite empreinte cryptographique à partir de la première concaténation de la donnée de lecture optique extraite et de la première donnée décodée ; la vérification de l'étape (d) que l'empreinte cryptographique d'une première concaténation de la donnée de lecture optique extraite et de la donnée décodée coïncide avec la première empreinte cryptographique comprenant la vérification que :
- la preuve à divulgation nulle de connaissance du calcul de ladite empreinte cryptographique à partir de la première concaténation de la donnée de lecture optique extraite et de la première donnée décodée est valide, et
- l'empreinte cryptographique reçue coïncide avec ladite première empreinte cryptographique dont dispose le serveur (2).

8. Procédé selon l'une des revendications 1 à 7, dans lequel les étapes (b) et (c) sont mise en oeuvre par les moyens de traitement de données (31) de l'équipement client (3), l'étape (c) comprenant la génération d'une preuve à divulgation nulle de connaissances du fait que la donnée biométrique de référence et la donnée biométrique candidate de l'individu coïncident ; ladite vérification de l'étape (d) que la donnée biométrique de référence et la donnée biométrique candidate de l'individu coïncident comprenant la vérification par les moyens de traitement de données (21) du serveur (2) que la preuve à divulgation nulle de connaissance du fait que la donnée biométrique de référence et la donnée biométrique candidate de l'individu coïncident est valide.

9. Procédé selon l'une des revendications 1 à 8, comprenant une étape antérieure (a0) d'enrôlement de données dudit document d'identité (1) comprenant des sous-étapes de :
(A) Obtention de la photographie dudit individu visible sur ledit document d'identité (1) et de la donnée de lecture optique du document d'identité (1) ;
(B) Extraction par analyse de ladite photographie de l'information de référence représentative de l'apparence de ladite photographie ;
(C) Génération de la première donnée d'aléa ; calcul de la première donnée encodée par application d'une procédure d'encodage à ladite information de référence représentative de l'apparence de ladite photographie et à ladite première donnée d'aléa, et de la première empreinte cryptographique.

10. Procédé selon les revendications 5 et 9 en combinaison, dans lequel lors de l'étape (a0), la sous-étape (A) ou la sous-étape (B) comprend l'obtention de ladite donnée biométrique de référence ; et la sous-étape étape (C) comprend en outre la génération de la deuxième donnée d'aléa et le calcul de la deuxième donnée encodée par application de ladite procédure d'encodage à ladite donnée biométrique de référence et à ladite deuxième donnée d'aléa, et de la troisième empreinte cryptographique.

11. Procédé selon l'une des revendications 1 à 10, comprenant une étape (e) d'enrôlement d'un authentificateur, en particulier de l'alliance Fast IDentity Online, FIDO

12. Procédé selon l'une des revendications 1 à 11, dans lequel l'information de référence représentative d'une apparence attendue de ladite photographie est une donnée de sécurité de type Digital Photo Seal.

13. Ensemble d'authentification forte comprenant un serveur (2) et un équipement client (3) connectés, **caractérisé en ce que** l'équipement client (3) et/ou le serveur (2) comprennent des moyens de traitement de données (21, 31) configurés pour :
• Extraire, par analyse d'une image acquise d'un document d'identité (1) représentant au moins une photographie d'un individu et une donnée de lecture optique visibles sur ledit document d'identité (1) :
∘ une information candidate représentative de l'apparence de ladite photographie tel que représentée dans l'image acquise ;
∘ ladite donnée de lecture optique tel que représentée dans l'image acquise ;
• Calculer une première donnée décodée par application d'une procédure de décodage à ladite information candidate représentative de l'apparence de ladite photographie et à la première donnée encodée, telle que ladite première donnée décodée correspond à une première donnée d'aléa si ladite information candidate représentative de l'apparence de ladite photographie coïncide avec une information de référence représentative de l'apparence de ladite photographie, le serveur (2) disposant d'une empreinte cryptographique d'une première concaténation de ladite donnée de lecture optique dudit document d'identité (1) et ladite première donnée d'aléa, dite première empreinte cryptographique ;
• vérifier que :
- une empreinte cryptographique d'une première concaténation de la donnée de lecture optique extraite et de la donnée décodée coïncide avec ladite première empreinte cryptographique dont dispose le serveur (2) ; et
- une donnée biométrique de référence et la donnée biométrique candidate de l'individu coïncident.

14. Produit programme d'ordinateur comprenant des instructions de code pour l'exécution d'un procédé selon l'une des revendications 1 à 12 d'authentification forte d'un individu, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 12 d'authentification forte d'un individu.

## Patentansprüche

1. Verfahren zur starken Authentifizierung einer Person, das von einem Server (2) und einem Client-Gerät (3) durchgeführt wird, die miteinander verbunden sind;
wobei das Client-Gerät (3) über eine in Frage kommende biometrische Angabe der Person und ein erfasstes Bild eines Identitätsdokuments (1) verfügt, das mindestens ein Foto der Person und eine auf dem Identitätsdokument (1) sichtbare optisch lesbare Angabe darstellt, und wobei der Server (2) über einen kryptografischen Fingerabdruck einer ersten Verkettung der optisch lesbaren Angabe des Identitätsdokuments (1) und einer ersten Zufallsangabe, des so genannten ersten kryptografischen Fingerabdrucks, verfügt;
wobei das Verfahren **dadurch gekennzeichnet ist, dass** es die Durchführung folgender Schritte durch Datenverarbeitungsmittel (21, 31) des Servers (2) und/oder des Client-Geräts (3) umfasst:
(b) Extrahieren, durch Analyse des erfassten Bildes des Identitätsdokuments (1), von:
o einer in Frage kommenden Information, die für das Erscheinungsbild des Fotos, wie in dem erfassten Bild dargestellt, repräsentativ ist;
o der optisch lesbaren Angabe, wie in dem erfassten Bild dargestellt;
(c) Berechnen einer ersten decodierten Angabe durch Anwenden eines Decodierungsverfahrens auf die in Frage kommende Information, die für das Erscheinungsbild des Fotos repräsentativ ist, und auf eine erste codierte Angabe, wobei die erste decodierte Angabe der ersten Zufallsangabe entspricht, wenn die in Frage kommende Information, die für das Erscheinungsbild des Fotos repräsentativ ist, mit einer Referenzinformation übereinstimmt, die für das Erscheinungsbild des Fotos repräsentativ ist;
(d) Überprüfen, dass:
- ein kryptografischer Fingerabdruck einer ersten Verkettung der extrahierten optisch lesbaren Angabe und der decodierten Angabe mit dem ersten kryptografischen Fingerabdruck übereinstimmt, der dem Server (2) zur Verfügung steht; und
- eine biometrische Referenzangabe und die in Frage kommende biometrische Angabe der Person übereinstimmen.

2. Verfahren nach Anspruch 1, umfassend einen Schritt (a) des vorherigen Erfassens des Bildes des Identitätsdokuments (1), das mindestens ein Foto einer Person und eine optisch lesbare Angabe darstellt, die auf dem Identitätsdokument (1) sichtbar sind, durch optische Erfassungsmittel (30) des Client-Geräts (3), und das Erzeugen der in Frage kommenden biometrischen Angabe aus einem biometrischen Merkmal, das von biometrischen Erfassungsmitteln bereitgestellt wird.

3. Verfahren nach Anspruch 2, wobei die biometrischen Erfassungsmittel die optischen Erfassungsmittel (30) des Client-Geräts (3) sind, wobei das Client-Gerät (3) ein persönliches elektronisches Gerät der Person ist, insbesondere vom Typ mobiles Endgerät oder Chipkarte

4. Verfahren nach einem der Ansprüche 1 bis 3, wobei der Server (2) oder das Gerät (3) über eine Verschlüsselung der biometrischen Referenzangabe der Person mit einem kryptografischen Fingerabdruck einer zweiten Verkettung der optisch lesbaren Angabe des Identitätsdokuments (1) und der ersten Zufallsangabe verfügt, die sich von der ersten Verkettung unterscheidet; wobei der Schritt (c) die Entschlüsselung der mindestens einen verschlüsselten biometrischen Referenzangabe der Person mittels des kryptografischen Fingerabdrucks einer zweiten Verkettung der extrahierten optisch lesbaren Angabe und der ersten decodierten Angabe umfasst.

5. Verfahren nach einem der Ansprüche 1 bis 3, wobei der Server (2) über einen kryptografischen Fingerabdruck verfügt, der aus einer zweiten Zufallsangabe gebildet wird, dem so genannten dritten kryptografischen Fingerabdruck; wobei der Schritt (c) das Berechnen,durch die Datenverarbeitungsmittel (21, 31) des Servers (2) oder des Client-Geräts (3) einer zweiten decodierten Angabe durch das Anwenden eines Decodierungsverfahrens auf die in Frage kommende biometrische Angabe und auf eine zweite codierte Angabe umfasst, wobei die zweite decodierte Angabe der zweiten Zufallsangabe entspricht, wenn die in Frage kommende biometrische Angabe mit der biometrischen Referenzangabe übereinstimmt; wobei das Überprüfen aus Schritt (d), dass die biometrische Referenzangabe und die in Frage kommende biometrische Angabe übereinstimmen, das Überprüfen umfasst, dass ein kryptografischer Fingerabdruck, der aus der zweiten decodierten Angabe auf dieselbe Weise gebildet wird wie der dritte kryptografische Fingerabdruck aus der zweiten Zufallsangabe gebildet wird, mit dem dritten kryptografischen Fingerabdruck übereinstimmt, der dem Server (2) zur Verfügung steht.

6. Verfahren nach einem der Ansprüche 1 bis 5, wobei der Schritt (a) das Empfangen des erfassten Bildes des Identitätsdokuments (1) durch den Server (2) und der in Frage kommenden biometrischen Angabe von dem Client-Gerät (3) umfasst, wobei die Schritte (b) bis (d) von den Datenverarbeitungsmitteln (21) des Servers (2) durchgeführt werden.

7. Verfahren nach einem der Ansprüche 1 bis 5, wobei die Schritte (b) und (c) von den Datenverarbeitungsmitteln (31) des Client-Geräts (3) durchgeführt werden, wobei der Schritt (c) das Berechnen des kryptografischen Fingerabdrucks einer ersten Verkettung der extrahierten optisch lesbaren Angabe und der ersten decodierten Angabe und das Erzeugen eines Nulloffenbarungsnachweises von Kenntnissen über das Berechnen des kryptografischen Fingerabdrucks aus der ersten Verkettung der extrahierten optisch lesbaren Angabe und der ersten decodierten Angabe umfasst; wobei das Überprüfen aus Schritt (d), dass der kryptografische Fingerabdruck einer ersten Verkettung der extrahierten optisch lesbaren Angabe und der decodierten Angabe mit dem ersten kryptografischen Fingerabdruck übereinstimmt, das Überprüfen umfasst, dass:
- der Nulloffenbarungsnachweis der Kenntnis des Berechnens des kryptografischen Fingerabdrucks aus der ersten Verkettung der extrahierten optisch lesbaren Angabe und der ersten decodierten Angabe gültig ist, und
- der empfangene kryptografische Fingerabdruck mit dem ersten kryptografischen Fingerabdruck übereinstimmt, der dem Server (2) zur Verfügung steht.

8. Verfahren nach einem der Ansprüche 1 bis 7, wobei die Schritte (b) und (c) von den Datenverarbeitungsmitteln (31) des Client-Geräts (3) durchgeführt werden, wobei der Schritt (c) das Erzeugen eines Nulloffenbarungsnachweises von Kenntnissen darüber umfasst, dass die biometrische Referenzangabe und die in Frage kommende biometrische Angabe der Person übereinstimmen; wobei das Überprüfen aus Schritt (d), dass die biometrische Referenzangabe und die in Frage kommende biometrische Angabe der Person übereinstimmen, das Überprüfen durch die Datenverarbeitungsmittel (21) des Servers (2) umfasst, dass der Nulloffenbarungsnachweis von Kenntnissen darüber, dass die biometrische Referenzangabe und die in Frage kommende biometrische Angabe der Person übereinstimmen, gültig ist.

9. Verfahren nach einem der Ansprüche 1 bis 8, umfassend einen vorherigen Schritt (a0) des Heranziehens von Angaben des Identitätsdokuments (1), umfassend die folgenden Unterschritte:
(A) Erhalten des auf dem Identitätsdokument (1) sichtbaren Fotos der Person und der optisch lesbaren Angabe des Identitätsdokuments (1);
(B) Extrahieren, durch Analyse des Fotos, der Referenzinformation, die für das Erscheinungsbild des Fotos repräsentativ ist;
(C) Erzeugen der ersten Zufallsangabe; Berechnen der ersten codierten Angabe durch Anwenden eines Codierungsverfahrens auf die Referenzinformation, die für das Erscheinungsbild des Fotos repräsentativ ist, und auf die erste Zufallsangabe, und des ersten kryptografischen Fingerabdrucks.

10. Verfahren nach Anspruch 5 und 9 in Kombination, wobei bei Schritt (a0) Unterschritt (A) oder Unterschritt (B) das Erhalten der biometrischen Referenzangabe umfasst; und Unterschritt Schritt (C) ferner das Erzeugen der zweiten Zufallsangabe und das Berechnen der zweiten codierten Angabe durch Anwenden des Codierungsverfahrens auf die biometrische Referenzangabe und die zweite Zufallsangabe und des dritten kryptografischen Fingerabdrucks umfasst.

11. Verfahren nach einem der Ansprüche 1 bis 10, umfassend einen Schritt (e) des Heranziehens eines Authentifikators, insbesondere der
Fast IDentity Online Alliance, FIDO

12. Verfahren nach einem der Ansprüche 1 bis 11, wobei die Referenzinformation, die für ein erwartetes Erscheinungsbild des Fotos repräsentativ ist, eine Sicherheitsangabe vom Typ Digital Photo Seal ist.

13. Anordnung zur starken Authentifizierung, umfassend einen Server (2) und ein Client-Gerät (3), die miteinander verbunden sind, **dadurch gekennzeichnet, dass** das Client-Gerät (3) und/oder der Server (2) Datenverarbeitungsmittel (21, 31) umfassen, die zu Folgendem konfiguriert sind:
• Extrahieren, durch Analyse eines erfassten Bildes eines Identitätsdokuments (1), das mindestens ein Foto einer Person und eine auf dem Identitätsdokument (1) sichtbare optisch lesbare Angabe darstellt, von:
o einer in Frage kommenden Information, die für das Erscheinungsbild des Fotos, wie in dem erfassten Bild dargestellt, repräsentativ ist;
o der optisch lesbaren Angabe, wie in dem erfassten Bild dargestellt;
• Berechnen einer ersten decodierten Angabe durch Anwenden eines Decodierungsverfahrens auf die in Frage kommende Information, die für das Erscheinungsbild des Fotos repräsentativ ist, und auf die erste codierte Angabe, wobei die erste decodierte Angabe einer ersten Zufallsangabe entspricht, wenn die in Frage kommende Information, die für das Erscheinungsbild des Fotos repräsentativ ist, mit einer Referenzinformation übereinstimmt, die für das Erscheinungsbild des Fotos repräsentativ ist, wobei der Server (2) über einen kryptografischen Fingerabdruck einer ersten Verkettung der optisch lesbaren Angabe des Identitätsdokuments (1) und der ersten Zufallsangabe verfügt, dem so genannten ersten kryptografischen Fingerabdruck;
• Überprüfen, dass:
- ein kryptografischer Fingerabdruck einer ersten Verkettung der extrahierten optisch lesbaren Angabe und der decodierten Angabe mit dem ersten kryptografischen Fingerabdruck übereinstimmt, der dem Server (2) zur Verfügung steht, und
- eine biometrische Referenzangabe und die in Frage kommende biometrische Angabe der Person übereinstimmen.

14. Computerprogrammprodukt, umfassend Codeanweisungen für die Ausführung eines Verfahrens nach einem der Ansprüche 1 bis 12 zur starken Authentifizierung einer Person, wenn das Verfahren auf einem Computer ausgeführt wird.

15. Computerlesbares Speichermedium, auf dem ein Computerprogrammprodukt Codeanweisungen für die Ausführung eines Verfahrens nach einem der Ansprüche 1 bis 12 zur starken Authentifizierung einer Person umfasst.

## Claims

1. A method for strong authentication of an individual implemented by a server (2) and a client device (3) that are connected;
the client device (3) having a candidate biometric data of the individual and an image acquired from an identity document (1) representing at least one photograph of said individual and one optical reading data visible on said identity document (1), and the server (2) having a cryptographic footprint of a first concatenation of said optical reading data of said identity document (1) and of a first random data, so-called cryptographic footprint;
wherein the method is **characterized in that** it comprises the implementation by data processing means (21, 31) of the server (2) and/or of the client device (3) of steps of;
(b) Extraction, by analysis of said image acquired from said identity document (1), of:
∘ candidate information representative of the appearance of said photograph as depicted in the acquired image;
∘ said optical reading data as depicted in the acquired image;
(c) Calculation of a first data decoded by application of a decoding process to said candidate information representative of the appearance of said photograph and to a first encoded data, such that said first decoded data matches the first random data if said candidate information representative of the appearance of said photograph coincides a reference information representative of the appearance of said photograph;
(d) Verification that:
- a cryptographic footprint of a first concatenation of the extracted optical reading data and of the decoded data coincides with said first cryptographic footprint in the possession of the server (2); and
- a reference biometric data and the candidate biometric data of the individual match.

2. The method according to claim 1, comprising a step (a) of prior acquisition of said image of said identity document (1) representing at least one photograph of an individual and one optical reading data visible on said identity document (1) by optical acquisition means (30) of the client device (3), and the generation of the candidate biometric data from a biometric trait provided by the biometric acquisition means.

3. The method according to claim 2, wherein the biometric acquisition means are the optical acquisition means (30) of the client device (3), the client device (3) being electronic equipment personal to said individual, in particular a mobile terminal or chip type card

4. The method according to one of claims 1 to 3, wherein the server (2) or the device (3) has an encryption of the reference biometric data of said individual with a cryptographic footprint of a second concatenation of the optical reading data of the identity document (1) and of the first random data, different from the first concatenation; wherein step (c) comprises the de-encryption of the at least one reference biometric data of said individual encrypted, by means of the cryptographic footprint of a second concatenation of the extracted optical reading data and of the first decoded data.

5. The method according to one of claims 1 to 3 wherein the server (2) has a cryptographic footprint constructed using a second random data, so-called third cryptographic footprint; step (c) comprising the calculation by the data processing means (21, 31) of the server (2) or of the client device (3) of a second data decoded by application of a decoding process to said candidate biometric data and to a second encoded data, such that said second decoded data matches the second random data if said candidate biometric data coincides with the reference biometric data; said verification of step (d) that the reference biometric data and the candidate biometric data of the individual coincide comprising the verification that a cryptographic footprint constructed from the second decoded data in the same way as the third cryptographic footprint is constructed from the second random data coincides with said third cryptographic footprint in the possession of the server (2).

6. The method according to one of claims 1 to 5, wherein step (a) comprises the reception by the server (2) of the acquired image of said identity document (1) and of the candidate biometric data from the client device (3), wherein steps (b) to (d) are implemented by the data processing means (21) of the server (2).

7. The method according to one of claims 1 to 5 wherein steps (b) and (c) are implemented by the data processing means (31) of the client device (3), step (c) comprising the calculation of the cryptographic footprint from a first concatenation of the extracted optical reading data and from the first decoded data, and the generation of zero-knowledge proof of the calculation of said cryptographic footprint from the first concatenation of the extracted optical reading data and of the first decoded data; the verification of step (d) that the cryptographic footprint of a first concatenation of the extracted optical reading data and of the decoded data matches the first cryptographic footprint comprising the verification that:
- the zero-knowledge proof of the calculation of said cryptographic footprint from the first concatenation of the extracted optical reading data and of the first decoded data is valid, and
- the cryptographic footprint received matches said first cryptographic footprint in the possession of the server (2).

8. The method according to one of claims 1 to 7 wherein steps (b) and (c) are implemented by the data processing means (31) of the client device (3), wherein step (c) comprises the generation of a zero-knowledge proof of the fact that the reference biometric data and the candidate biometric data of the individual match; said verification of step (d) that the reference biometric data and the candidate biometric data of the individual match comprising the verification by the data processing means (21) of the server (2) that the zero-knowledge proof of the fact that the reference biometric data and the candidate biometric data of the individual match is valid.

9. The method according to one of claims 1 to 8, comprising a prior step (a0) of enrollment of data from said identity document (1) comprising sub-steps of:
(A) Obtaining the photograph of said individual visible on said identity document (1) and of the optical reading data of the identity document (1);
(B) Extracting by analysis said photograph of the reference information representative of the appearance of said photograph;
(C) Generating the first random data; calculating the first encoded data by application of an encoding process to said reference information representative of the appearance of said photograph and to said first random data, and of the first cryptographic footprint.

10. The method according to claims 5 and 9 in combination, wherein during step (a0), sub-step (A) or sub-step (B) comprises the obtaining of said reference biometric data; and sub-step (C) further comprises the generation of the second random data and the calculation of the second encoded data by application of said encoding process to said reference biometric data and to said second random data, and of the third cryptographic footprint.

11. The method according to one of claims 1 to 10, comprising a step (e) of enrollment of an authenticator, in particular from the Fast Identity Online, FIDO, alliance

12. The method according to one of claims 1 to 11, wherein the reference information representative of an expected appearance of said photograph is a Digital Photo Seal type security data.

13. A strong authentication assembly comprising a connected server (2) and client device (3), **characterized in that** the client device (3) and/or the server (2) comprise data processing means (21, 31) configured to:
• Extract, by analysis of an image acquired from an identity document (1) representing at least one photograph of an individual and one optically readable data that are visible on said identity document (1):
∘ candidate information representative of the appearance of said photograph as depicted in the acquired image;
∘ said optical reading data as depicted in the acquired image;
• Calculate a first data decoded by application of a decoding process to said candidate information representative of the appearance of said photograph and to the first encoded data, such that said first decoded data matches a first random data if said candidate information representative of the appearance of said photograph matches a reference information representative of the appearance of said photograph, wherein the server (2) has a cryptographic footprint of a first concatenation of said optical reading data of said identity document (1) and said first random data, so called first cryptographic footprint;
• verifying that:
- a cryptographic footprint of a first concatenation of the extracted optical reading data and of the decoded data coincides with said first cryptographic footprint in the possession of the server (2); and
- a reference biometric data and the candidate biometric data of the individual match.

14. A computer program product comprising code instructions for the execution of a method according to one of claims 1 to 12 for strong authentication of an individual, when said method is executed on a computer.

15. A storage means readable by a computer equipment whereupon a computer program product comprises code instructions for the execution of a method according to one of claims 1 to 12 for strong authentication of an individual.
